# EUROPÄISCHE PATENTSCHRIFT

(11) **EP 2 269 167 B1**
(45) Veröffentlichungstag und Bekanntmachung des Hinweises auf die Patenterteilung: **27.06.2018**
(21) Anmeldenummer: 09732537.7
(22) Anmeldetag: 11.03.2009
(51) Int. Cl.: G06Q 20/04, G06Q 20/32, G06Q 20/34, G06Q 20/40, G06K 19/077, G07F 7/10

(54) **DOKUMENT MIT EINER INTEGRIERTEN ANZEIGE UND EMPFÄNGER-GERÄT**
DOCUMENT WITH AN INTEGRATED DISPLAY AND RECEIVER UNIT
DOCUMENT AVEC AFFICHAGE INTÉGRÉ ET APPAREIL DE RÉCEPTION

(30) Priorität: 14.04.2008 DE 102008001148
(43) Veröffentlichungstag der Anmeldung: 05.01.2011
(73) Patentinhaber: Bundesdruckerei GmbH, 10958 Berlin (DE)
(72) Erfinder: DIETRICH, Frank, 12437 Berlin (DE); FISCHER, Jörg, 13053 Berlin (DE); KÖLTZSCH, Gregor, 10317 Berlin (DE); MATHEA, Arthur, 14199 Berlin (DE); PFLUGHOEFFT, Malte, 13347 Berlin (DE)
(74) Vertreter: Richardt Patentanwälte PartG mbB
(86) Internationale Anmeldenummer: PCT/EP2009/052820
(87) Internationale Veröffentlichungsnummer: WO 2009/127474

(56) Entgegenhaltungen:
- WO-A1-00/62260
- DE-A1-102004 046 847
- DE-A1-102006 009 128
- DE-A1-102006 025 023
- GB-A- 2 361 570
- US-A1- 2006 000 897

## Beschreibung

Die Erfindung betrifft ein Dokument mit einer integrierten Anzeige und ein Datenverar- beitungsverfahren. Aus dem Stand der Technik sind verschiedene Systeme für das sogenannte Electronic Ticketing bekannt.

Aus der DE 102 14 764 A1 ist die Verwendung eines Mobiltelefons für das Electronic Ticketing bekannt. Wenn ein Benutzer mit seinem Mobiltelefon einen Chipkarten-Terminal passiert, um ein öffentliches Verkehrsmittel zu benutzen, so kommt es beim Passieren des Chipkarten-Terminals kurzfristig zum Aufbau einer lokalen Verbindung aufgrund derer ein JAVA-Card Applet in einem Speicherbereich der SIM-Karte des Mobiltelefons aktiviert wird, um die Electronic Ticketing Anwendung zu starten, das heißt, um die für die Beförderung fällig werdenden Gebühren zu erfassen. Aus WO 00/62260 ist ein weiteres Electronic Ticketing System bekannt, das auf einem Mobiltelefonnetzwerk basiert.

Aus der GB 242 38 53 A ist ein weiteres Electronic Ticketing System unter Verwendung eines Mobiltelefons bekannt. Das Mobiltelefon empfängt das Electronic Ticket als farbcodierte MMS.

Aus JP 2000 251 146 A (Abstract) ist eine Electronic Ticketing System unter Verwendung einer Chipkarte bekannt.

Aus US 2003/010 5641 A1 und US 2008/001 5983 A1 sind ferner Electronic Ticketing Systeme bekannt, die auf einem ausgedruckten Ticket basieren.

Aus WO 2007/137555 A2 ist ein elektronisch konfigurierbares Kraftfahrzeug-Kennzeichen mit einem Display bekannt. Um das Kraftfahrzeug-Kennzeichen zu konfigurieren, werden Daten in einer externen Konfigurationseinheit zusammengestellt und verschlüsselt. Die verschlüsselten Daten werden von einem in die Konfigurationseinheit integrierten Infrarot-Sender als Infrarot-Signale ausgesendet. In der Anzeigeelektronik für das Kraftfahrzeug-Kennzeichen werden die Signale entschlüsselt, wofür eine entsprechende Entschlüsselungs-Software in der Anzeigeelektronik gespeichert ist. Weitere elektronische Kraftfahrzeug-Kennzeichen sind bekannt aus US 5,657,008 und US 2007/0285361 A1. Das Dokument DE 10 2004 046847 A1 offenbart einen tragbaren Datenträger mit einer Anzeigeeinheit. Der tragbare Datenträger hat eine Datenschnittstelle zum "Austausch" von Daten mit externen Geräten. Der tragbare Datenträger ist zum Empfang einer Nachricht ausgebildet, die "Anzeigedaten", einen Hashwert und eine Server-Signatur beinhalten.

Das Dokument US2006/000897 A1 offenbart eine Smartcard, die einen biometrischen Sensor umfasst.

Das Dokument DE 10 2006 009128 A1 offenbart ein Dokument, das eine Schnittstelle zum Empfang einer Anforderung eines externes Lesegeräte umfasst.

Dem gegenüber liegt der Erfindung die Aufgabe zu Grunde, ein verbessertes Dokument zu schaffen sowie ein Datenverarbeitungsverfahren. Die der Erfindung zu Grunde liegenden Aufgaben werden jeweils mit den Merkmalen der unabhängigen Patentansprüche gelöst. Ausführungsformen der Erfindung sind in den abhängigen Patentansprüchen angegeben.

Nach Ausführungsformen der Erfindung wird ein Dokument mit einer integrierten Anzeige geschaffen. Das Dokument hat eine Schnittstelle zum Empfang von Berechtigungsdaten und einer Signatur der Berechtigungsdaten. Ferner verfügt das Dokument über Mittel zur Verifikation der Signatur, das heißt, zur Überprüfung der Gültigkeit der Signatur. Ferner hat das Dokument Mittel zur Ansteuerung der Anzeige zur Ausgabe zumindest eines Teils der Berechtigungsdaten. Die Mittel zur Ansteuerung sind so ausgebildet, dass die Ausgabe nur dann erfolgt, wenn die Signatur gültig ist. Die Schnittstelle des Dokuments ist zum Senden und/oder Empfang der Berechtigungsdaten und der Signatur der Berechtigungsdaten ausgebildet. Unter einem "Dokument" wird hier insbesondere ein Wert- oder Sicherheitsdokument verstanden, wie zum Beispiel ein papier- und/oder kunststoff-basiertes Dokument. Bei dem Dokument kann es sich insbesondere um eine Chipkarte handeln.

Unter einem "Dokument" wird auch ein elektronisches Kennzeichen, insbesondere ein elektronisches Kraftfahrzeugkennzeichen, verstanden. Das Dokument kann auch einen integralen Bestandteil eines Transportmittels, insbesondere eines Kraftfahrzeugs, bilden. Beispielsweise kann das Dokument in die Front- bzw. Heckhaube bzw. in das sog. Frontend oder Backend integriert sein, indem dort ein Display erfindungsgemäß eingebracht oder aufgebracht wird.
Das Dokument kann auch metallbasiert sein, insbesondere blechbasiert; es kann also einen Dokumentenkörper aus Blech haben. Es kann aber auch ein Dokumentenkörper aus einem anderen Material haben, wie z.B. aus einem Verbundmaterial, wie er im Fahrzeugbau verwendet wird. Beispiele von Anzeigen eines Dokuments sind: eine elektrophoretische oder elektrochrome Anzeige, eine bistabile Anzeige, eine Drehelementanzeige, insbesondere sog. elektronisches Papier ("E-Paper"), eine LED-Anzeige, insbesondere eine anorganische, organische oder Hybrid-LED-Anzeige, eine LCD-Anzeige in verschiedenen Ausführungsformen (zum Beispiel Twisted Nematic, Super Twisted Nematic, cholesterisch, nematisch), eine ferroelektrische Anzeige, eine Anzeige auf der Basis des Elektrowetting-Effekts, eine Anzeige auf Basis interferometrischer Modulatorelemente (IMOD), eine Hybridanzeige oder eine Anzeige auf Basis eines flexiblen Displays, wie sie beispielsweise von der Firma Citala (www.citala.com) kommerziell erhältlich ist (vergleiche US 2006/0250535 A1 und WO 2007/054944). Insbesondere eine Photolumineszenz-Löschungsanzeige ermöglicht neben der Ausgabe der Berechtigungsdaten in Form eines maschinenlesbaren optischen Signals und/oder der Anzeige der Berechtigungsdaten auch die Erfassung eines optischen Signals. Photolumineszenz-Löschungsanzeigen basieren beispielsweise auf Fluoreszenz-Anzeigeelementen, die neben ihrer Anzeigefunktion auch zur Signalerfassung dienen. Entsprechende Anzeigevorrichtungen und Verfahren, insbesondere betreffend so genannte Field Quenching Photoluminescence Emission Devices (FQPEDs) sind beispielsweise bekannt aus DE 10042974 A1, DE 10313805 B4, EP 01385338 A1, EP 01391868 A1, EP 01443093 A1, EP 01478024 A1, EP 01478026 A2, US 06667729 B2, US 24017148 A1, US 25287899 A1, DE 10042974 A1, DE 10359881 A1 und EP 01662305 A2.

Das Dokument kann einen Speicher für Daten aufweisen, die über die Anzeige optisch ausgegeben werden können. Beispielsweise wird die Anzeige von einem Treiber des Dokuments zur Wiedergabe der Daten angesteuert und/oder die Anzeige wird zur Ausgabe eines maschinenlesbaren Signals angesteuert, welches die Daten zu einem Lesegerät überträgt.

Die in dem Dokument gespeicherten Daten können verschiedene Inhalte beinhalten, die zur Erzeugung einer Bildwiedergabe auf der Anzeigevorrichtung geeignet sind, das heißt, beispielsweise digitale Bildaufnahmen, insbesondere Gesichtsbilder einer Person, Wappen, Siegel, textuelle Angaben, Barcodes, ein Kennzeichen, insbesondere eine amtliches Kraftfahrzeugkennzeichen, und dergleichen.

Nach einer Ausführungsform der Erfindung beinhalten die Daten eine Information, wie zum Beispiel eine Personalisierungsinformation, ein Sicherheitsmerkmal, einen kryptographischen Schlüssel, einen Fahrzeugparameter und/oder einen Gebührenstatus.

Bei den Personalisierungsinformationen kann es sich beispielsweise um Angaben bezüglich des Trägers des Dokuments handeln, wie zum Beispiel dessen Namen, Wohnort, Größe, Alter, Geschlecht, Gewicht und dergleichen. Diese Angaben können bei der Wiedergabe der zweiten Daten im Klartext auf der Anzeigevorrichtung angezeigt werden.

Nach einer Ausführungsform der Erfindung handelt es sich bei der Information um ein Sicherheitsmerkmal, wie zum Beispiel ein Wappen, Siegel oder dergleichen. Diese Information wird bei der Wiedergabe der ersten Daten durch das digitale Wasserzeichen von der Anzeigevorrichtung ausgegeben.

Nach einer Ausführungsform der Erfindung handelt es sich bei der Information um einen kryptographischen Schlüssel. Bei dem kryptographischen Schlüssel kann es sich um einen symmetrischen oder um einen asymmetrischen Schlüssel handeln. Der kryptographische Schlüssel wird von dem Lesegerät erfasst, so dass das Lesegerät zusammen mit dem Dokument ein kryptographisches Protokoll ausführen kann.

Nach einer Ausführungsform der Erfindung handelt es sich bei der Information um einen Fahrzeugparameter und/oder einen Gebührenstatus des Kraftfahrzeugs. Das Dokument, insbesondere in der Ausführungsform als elektronisches Kraftfahrzeug-kennzeichen, kann an dem Kraftfahrzeug oder einem Kraftfahrzeugteil befestigt sein.

Bei dem Fahrzeugparameter kann es sich z.B. um die Geschwindigkeit des Kraftfahrzeugs, einen Lärmpegel oder einen Abgaswert handeln. Insbesondere kann durch die Information ausgegeben werden, welche Schadstoffklasse das Kraftfahrzeug erfüllt, insbesondere gemäß der anwendbaren Feinstaubverordnung.

Durch die Ausgabe des Gebührenstatus kann angezeigt werden, ob für das Kraftfahrzeug die vorgeschriebenen Gebühren, Steuern und/oder Abgaben, insbesondere Mautgebühren, Kraftfahrzeugsteuern und/oder Abgasgebühren, bezahlt worden sind.

Die Information kann teilweise oder ganz zusätzlich im Klartext auf der Anzeigevorrichtung angezeigt werden
Nach einer Ausführungsform der Erfindung ist die Schnittstelle für eine Nahfeldkommunikation ausgebildet. Beispielsweise handelt es sich bei der Schnittstelle um eine Funkschnittstelle, insbesondere eine RFID-Schnittstelle oder eine BlueTooth Schnittstelle. Wenn die Anzeige des Dokuments zur Erfassung eines optischen Signals ausgebildet ist, kann die Schnittstelle durch die Anzeige realisiert sein. Eine separate Schnittstelle kann dann entfallen.

Die Mittel zur Verifikation der Signatur können für eine sogenannte ZertifikatsKettenprüfung ausgebildet sein. Unter einer "Signatur" wird hier eine digitale Signatur verstanden, welche eine Prüfung der Authentizität der Berechtigungsdaten ermöglicht. Insbesondere kann es sich um eine elektronische Signatur, wie zum Beispiel eine signaturgesetzkonforme elektronische Signatur, handeln.

Zusammen mit der Signatur kann über die Schnittstelle ein digitales Zertifikat empfangen werden, um die Überprüfung der Signatur in einer Public Key Infrastructure (PKI) zu ermöglichen. Beispielsweise kann es sich bei dem Zertifikat um ein standardisiertes Zertifikat, wie zum Beispiel nach dem X.509, RFC2440 oder ISO7816 Standard handeln. Vorzugsweise handelt es sich um ein sogenanntes Card Verifiable Certificate (CV-Zertifikat).

Die Mittel zur Ansteuerung der Anzeige zur Ausgabe zumindest eines Teils der Berechtigungsdaten beinhalten einen Treiber für die Anzeige. Der Treiber kann Teil der Anzeige sein oder Teil des elektronischen Chips, der in den Dokumentenkörper des Dokuments integriert ist. Die Mittel zur Verifikation der Signatur und die Mittel zur Ansteuerung der Anzeige können ganz oder teilweise durch die integrierte Schaltung, insbesondere einen Mikroprozessor, realisiert sein, der entsprechende Programminstruktionen ausführen kann.

Nach Empfang der Berechtigungsdaten und der Signatur der Berechtigungsdaten wird zunächst geprüft, ob die Signatur gültig ist. Nur wenn dies der Fall ist, werden die Berechtigungsdaten auf der Anzeige ausgegeben.

Unter "Berechtigungsdaten" werden hier insbesondere solche Daten verstanden, die die Berechtigung des rechtmäßigen Trägers des Dokuments zur Inanspruchnahme einer Leistung, insbesondere einer Transportdienstleistung, einer Straßenbenutzung oder des Zugangs zu einer Veranstaltung, spezifizieren. Insbesondere kann es sich bei den Berechtigungsdaten also um die Daten eines elektronischen Tickets handeln. Die Berechtigungsdaten können aber auch den Zugang des rechtmäßigen Trägers des Dokuments zu bestimmten Informationen, zu einem Gebäudeteil, zu bestimmten Straßen oder Straßenabschnitten, insbesondere zu sogenannten Umweltzonen in urbanen Ballungszentren, spezifizieren.

Umweltzonen bestehen z.B. in größeren Städten, um damit die Einhaltung der erlaubten Feinstaubkonzentration zu erreichen. Nach einer Ausführungsform der Erfindung entrichtet z.B. der Führer eines Kraftfahrzeugs eine Gebühr und erwirbt damit die Berechtigung in eine Umweltzone einzufahren. Die entsprechenden Berechtigungsdaten werden von einem Sender-Gerät durch das Dokument empfangen und zum Nachweis der Berechtigung zur Einfahrt in die Umweltzone zu einem Empfänger-Gerät übertragen.

Die Berechtigungsdaten können auch ein Beleg dafür sein, dass das Kraftfahrzeug ordnungsgemäß versichert ist und/oder dass das Kraftfahrzeug zugelassen ist und/oder dass die vorgeschriebene Hauptuntersuchung durchgeführt worden ist.

Die Berechtigungsdaten können auch das amtliche Kraftfahrzeugkennzeichen des Kraftfahrzeugs beinhalten und damit ein Beleg dafür sein, dass das Kraftfahrzeug-kennzeichen nicht manipuliert worden ist. Wenn beispielsweise das auf dem Dokument in einer Ausführung als elektronisches Kraftfahrzeugkennzeichen angezeigte Kennzeichen nicht mit dem in den Berechtigungsdaten beinhalteten Kraftfahrzeug-kennzeichen übereinstimmt, so deutet dies darauf hin, dass der Führer des Kraftfahrzeugs nicht der berechtigte Besitzer ist, sondern, dass das Kraftfahrzeug entwendet worden ist.

Beispielsweise beinhalten die Berechtigungsdaten Buchungsdaten einer Flugbuchung, einer Bahnfahrkarte, eines Tickets für den Nahverkehr, für eine Schifffahrt, eine sonstige Transportdienstleistung, eine Eintrittskarte oder dergleichen. Die Berechtigungsdaten können insbesondere Angaben zur Identifizierung des berechtigten Benutzers sowie verschiedene Angaben über zum Beispiel das Fahr- oder Flugziel, Abreise- und Ankunftszeiten, Bahnsteig, Boarding Gate und dergleichen beinhalten.

Aufgrund der Leseanforderung eines Empfänger-Geräts, wie zum Beispiel eines Kontroll-Geräts, sendet das Dokument die Berechtigungsdaten und deren Signatur. Das Empfänger-Gerät kann dann die Authentizität der Berechtigungsdaten mittels der Signatur prüfen.

Ausführungsformen der vorliegenden Erfindung sind besonders vorteilhaft, da die Berechtigungsdaten durch das Dokument angezeigt werden. Die Berechtigungsdaten können insbesondere Buchungsdaten und/oder Platzreservierungsdaten beinhalten. Die Buchungsdaten und/oder die Platzreservierungsdaten werden auf der Anzeige angezeigt, so dass der Träger des Dokuments diese ablesen kann. Dies ermöglicht auch eine Sichtprüfung des Dokuments, etwa für eine Fahrscheinkontrolle oder eine Zugangskontrolle. Besonders vorteilhaft ist hierbei, dass die über die Anzeige ausgegebenen Berechtigungsdaten einen hohen Grad an Vertrauenswürdigkeit haben, da diese ja nur nach erfolgreicher Verifikation der Signatur angezeigt werden.

Diese Sicherheit gegen Manipulationen wird dadurch weiter erhöht, dass die auf der Anzeige zumindest teilweise angezeigten Berechtigungsdaten über die Schnittstelle zusammen mit deren Signatur von einem externen Empfänger-Gerät aus dem Dokument ausgelesen werden können. Das Empfänger-Gerät kann auf diese Art und Weise seinerseits nochmals prüfen, ob die angezeigten Berechtigungsdaten authentisch sind. Allerdings ist auch dann eine Kontrolle des Dokuments mit einem hohen Maß an Sicherheit möglich, wenn gerade kein Empfänger-Gerät zur Verfügung steht, da ja die Berechtigungsdaten nur nach vorheriger Verifikation der Signatur auf dem Dokument angezeigt werden.

Nach einer Ausführungsform der Erfindung verfügt das Dokument über einen Energiespeicher, wie zum Beispiel eine Primärzelle, eine Sekundärzelle oder einen Speicherkondensator. Der Energiespeicher ermöglicht die Versorgung der Anzeige mit elektrischer Energie, so dass insbesondere eine emissive Anzeige verwendet werden kann. Die Anzeige des Dokuments ist bistabil. Unter einer bistabilen Anzeige wird hier eine Anzeige verstanden, die auch ohne die Zuführung von elektrischer Energie in ihrem Anzeigezustand verharrt, wie dies zum Beispiel bei sogenanntem elektronischem Papier der Fall ist. Die Verwendung einer bistabilen Anzeige hat den Vorteil, dass für die permanente Ausgabe der Berechtigungsdaten keine ständige Energiezufuhr nötig ist. Es ist also ein in das Dokument integrierter Energiespeicher nicht unbedingt erforderlich. Eine bistabile Anzeige hat Anzeigeelemente, die jeweils zumindest zwei verschiedene stabile Zustände einnehmen können.

Nach einer Ausführungsform der Erfindung ist die Anzeige des Dokumentes semibistabil, gibt also die Daten für einen Zeitraum von Minuten oder Stunden wieder, bevor der Inhalt der Anzeige nicht mehr zu erkennen ist. Bevorzugt hierbei ist, dass eine bistabile Anzeige verwendet wird, auf der gewisse Daten über einen langen Zeitraum bistabil dargestellt werden, andere Daten aufgrund eines anderen Ansteuerschemas semibistabil. Somit können zum Beispiel Angaben zum Dokumentinhaber permanent angezeigt werden, während Berechtigungsdaten, zum Beispiel Flugdaten, nur für den benötigten Zeitraum dargestellt werden.

Nach der Erfindung hat das Dokument Mittel zum Einkoppeln von Energie zur Energieversorgung der Anzeige und der integrierten elektronischen Schaltung. Die Einkopplung der Energie kann beispielsweise über eine elektromagnetische oder kapazitiven Kopplung mit einem Sender-Gerät und/oder einem Empfänger-Gerät erfolgen.
Die Schnittstelle des Dokuments ist vorzugsweise kontaktlos ausgebildet. Insbesondere kann die Schnittstelle nach einem oder mehreren der folgenden Standards ausgebildet sein:
ISO 14443 ID-Cards - Proximity Cards (Identifikationskarte, Reisedokumente)
ISO 10536 ID-Cards - Close Coupling Cards
ISO 15693 ID-Cards - Vicinity Cards
ISO 18000-3 Mode A
ISO 18092 Near Field Communication
ISO 14443A

Beispielsweise wird anlässlich des Empfangs der Berechtigungsdaten und deren Signatur von einem Sender-Gerät elektrische Energie in das Dokument eingekoppelt, so dass die integrierte elektronische Schaltung für die Dauer des Empfangs, der Verifikation der Signatur und gegebenenfalls der Ansteuerung der Anzeige mit elektrischer Energie versorgt wird. Nachdem die integrierte elektronische Schaltung die Anzeige zur Ausgabe zumindest eines Teils der Berechtigungsdaten angesteuert hat, ist zunächst keine weitere elektrische Energie erforderlich, da die Anzeige in ihrem dann eingenommenen Anzeigezustand verharrt, weil es sich um eine bistabile Anzeige handelt.

Zum Lesen der Berechtigungsdaten und deren Signatur aus dem Dokument erfolgt die Energieversorgung des Dokuments von dem Empfänger-Gerät, welches beispielsweise über die Schnittstelle diese elektrische Energie für die Dauer des Lesevorgangs einkoppelt.

Nach einer Ausführungsform der Erfindung hat das Dokument einen elektronischen Speicher zur Speicherung von Stammdaten. Die Stammdaten werden auf derselben Anzeige, wie die Berechtigungsdaten oder einer anderen Anzeige des Dokuments ausgegeben. Alternativ oder zusätzlich trägt das Dokument einen Aufdruck mit zumindest einem Teil der Stammdaten.

Nach einer Ausführungsform der Erfindung hat das Dokument ein oder mehrere optische Sicherheitsmerkmale des Wert- oder Sicherheitsdrucks. Solche optischen Sicherheitsmerkmale können visuell durch einen Benutzer und/oder maschinell durch einen optischen Sensor geprüft werden. Zu den optischen Sicherheitsmerkmalen zählen beispielsweise:
- Guillochen: Guillochen werden mit Hilfe von so genanntem Liniendruck auf das Dokument aufgedruckt. Sie bestehen im Allgemeinen aus in verschiedenen Farben übereinander gedruckten Wellen- und Schleifenmustern;
- Mikro-Schrift: Hierbei handelt es sich um aufgedruckte Schriftzüge in kleinster Schrift. Mit bloßem Auge lässt sich die Mikro-Schrift kaum erkennen. Beispielsweise ist Mikro-Schrift auf den Euro-Banknoten als Bildelemente in die Motive eingearbeitet. Mit Hilfe einer Lupe kann die Mikro-Schrift gelesen werden;
- Metamere Systeme: Aufgrund metamerer Farbgleichheit können unterschiedliche spektrale Zusammensetzungen des Lichts bei Menschen den gleichen Farbeindruck hervorrufen;
- Aufdrucke mit Fluoreszenz, Phosphoreszenz und/oder Up-Conversion-Farben;
- Aufdrucke mit Infrarot-Farbe: Die Farbe wird nur unter Infrarot-Strahlung für Lesegeräte mit entsprechenden Sensoren sichtbar. Beispielsweise sind Euro-Banknoten mit diesem optischen Sicherheitsmerkmal ausgestattet;
- Barcodes, insbesondere ein- oder zweidimensionale Barcodes;
- Optisch variable Farben (OVI - Optical Variable Ink): Bei einer optisch variablen Farbe ändert sich der Farbeindruck je nach Betrachtungswinkel, da das Licht an den Pigmenten gebrochen, gestreut oder reflektiert wird;
- Hologramme und Kinegramme (transparent oder reflektierend);
- Wasserzeichen, insbesondere digitale Wasserzeichen, die eine maschinell auslesbare Information tragen;
- Passerdruck: Verschiedene Muster oder Symbole werden so über- oder aneinander gedruckt, dass sie zusammen ein bestimmtes Bild ergeben. Kleinste Abweichungen im Stand, d.h. so genannte Passerungenauigkeiten, können leicht mit bloßem Auge erkannt werden. Wenn sich die Teilbilder auf verschiedenen Seiten des Dokuments, wie zum Beispiel einer Banknote, befinden, bezeichnet man dieses optische Sicherheitsmerkmal als Durchsichtspasser;
- Durchsichtsfenster: Ein Fenster aus einer transparenten Kunststofffolie ist in dem Dokument eingearbeitet;
- Melierfasern: Dem Papier des Dokuments werden Fasern beigemischt, die unter UV-Licht in verschiedenen Farben leuchten;
- Sicherheitsfaden;
- Mikroperforation.

Das Vorhandensein eines oder mehrerer der Sicherheitsmerkmale erhöht die Sicherheit gegen Manipulationen weiter. Die Prüfung der Authentizität des Dokuments basierend auf einem Sicherheitsmerkmal ist insbesondere vorteilhaft, wenn kein Kontroll-Gerät zur Verfügung steht, also eine reine Sichtprüfung des Dokuments vorgenommen wird.

Nach einer Ausführungsform der Erfindung ist das Dokument so ausgebildet, dass das Senden der Berechtigungsdaten und der Signatur der Berechtigungsdaten an das Empfänger-Gerät auf optischem Wege über die Anzeige des Dokuments erfolgt. Beispielsweise wird die Anzeige so angesteuert, dass ein ein- oder zweidimensionaler Barcode ausgegeben wird, der die Berechtigungsdaten und deren Signatur beinhaltet. Der Barcode wird dann von dem Empfänger-Gerät optisch erfasst und decodiert. Die Ausgabe der Berechtigungsdaten und deren Signatur über die Anzeige kann so erfolgen, dass sie durch einen Benutzer nicht kognitiv und/ oder nicht visuell erfassbar ist. Hierzu kann die Anzeige zur Ausgabe eines modulierten optischen Signals angesteuert werden, wie es an sich aus der DE 10 2006 031 422 A1 bekannt ist.

Nach einer Ausführungsform der Erfindung hat das Dokument Mittel zur Authentifizierung des Empfänger-Geräts. Die erfolgreiche Authentifizierung des Empfänger-Geräts gegenüber dem Dokument ist dabei eine notwendige Voraussetzung dafür, dass die Berechtigungsdaten und deren Signatur von dem Dokument ausgegeben werden. Dies ist besonders vorteilhaft, um den Datenschutz zu gewährleisten. Die Authentifizierung des Empfänger-Geräts kann mittels eines kryptographischen Protokolls, basierend auf einem symmetrischen Schlüssel und/oder einem asymmetrischen Schlüsselpaar erfolgen. Insbesondere kann die Authentifizierung des Empfänger-Geräts durch eine sogenannte Basic Access Control (BAC) oder eine sogenannte Extended Access Control (EAC) implementiert sein, um ein von dem Träger des Dokuments nicht autorisiertes oder unbemerktes Auslesen der Berechtigungsdaten zu unterbinden. BAC- und EAC-Verfahren sind beispielsweise von der internationalen Luftfahrtbehörde (ICAO) standardisiert worden.

Nach einer Ausführungsform der Erfindung hat das Dokument Mittel zur Authentifizierung gegenüber dem Empfänger-Gerät. Auch die Authentifizierung des Dokuments gegenüber dem Empfänger-Gerät kann mittels eines kryptographischen Protokolls unter Verwendung eines symmetrischen Schlüssels und/oder eines asymmetrischen Schlüsselpaars erfolgen. Insbesondere kann ein dem Dokument zugeordnetes Zertifikat in dessen elektronischen Speicher gespeichert sein, mit dessen Hilfe das Empfänger-Gerät das Dokuments authentifizieren kann. Hierdurch wird die Vertrauenswürdigkeit des Dokuments und der von ihm angezeigten Berechtigungsdaten weiter gesteigert.

Nach einer Ausführungsform der Erfindung beinhaltet das Dokument Mittel zur Authentifizierung des Trägers des Dokuments. Hierdurch soll sichergestellt werden, dass der Träger des Dokuments der rechtmäßige Besitzer des Dokuments ist. Die Authentifizierung des Trägers gegenüber dem Dokument kann so erfolgen, dass der Träger des Dokuments eine geheime Kennung unmittelbar in das Dokument oder in das Empfänger-Gerät eingeben muss, insbesondere dessen sogenannte Personal Identification Number (PIN).

Die Authentifizierung des Trägers des Dokuments kann auch mittels biometrischer Verfahren erfolgen. Beispielsweise sind hierzu in dem elektronischen Speicher des Dokuments biometrische Referenzdaten beispielsweise des Fingerabdrucks oder der Iris des rechtmäßigen Trägers des Dokuments gespeichert. Zur Authentifizierung werden die entsprechenden biometrischen Daten von dem Träger des Dokuments erfasst und mit den biometrischen Referenzdaten verglichen.

Die Erfassung der biometrischen Daten und der Vergleich mit den biometrischen Referenzdaten kann durch das Dokument selbst erfolgen, wenn dieses einen geeigneten Sensor zur Erfassung der biometrischen Daten, wie zum Beispiel einen Fingerabdrucksensor oder eine Miniatur-Kamera aufweist. Alternativ kann die Erfassung und der Vergleich mit den Referenzdaten durch das Empfänger-Gerät vorgenommen werden, indem dieses die biometrischen Referenzdaten nach vorheriger Authentifizierung aus dem elektronischen Speicher des Dokuments ausliest. Das Empfänger-Gerät hat einen Sensor zur Erfassung der entsprechenden biometrischen Daten, so dass das Empfänger-Gerät die Authentifizierung des Trägers vornehmen kann. Durch diese Authentifizierung des Trägers kann sich eine Kontrollinstanz dahingehend Sicherheit verschaffen, dass das Dokument dem rechtmäßigen Besitzer nicht entwendet worden ist.

Nach Ausführungsformen der Erfindung ist besonders vorteilhaft, dass nur noch ein einziges Dokument als Berechtigungsnachweis erforderlich ist. Im Stand der Technik sind nämlich beispielsweise für den Luftverkehr eine Kundenkarte, wie zum Beispiel eine sogenannte Miles & More Karte, in Kombination mit dem Boarding Pass als Berechtigungsnachweis erforderlich. Für eine Bahnfahrt sind dies sogar drei Dokumente, nämlich die BahnCard, die Fahrkarte sowie eine Sitzplatzreservierung. Die Erfindung ermöglicht es dem gegenüber sowohl die langfristig gültigen Stammdaten als auch die nur kurzfristig relevanten leistungsbezogenen Daten der gebuchten Transportdienstleistung in einem einzigen Dokument zu integrieren. Hierzu können beispielsweise sowohl die Stammdaten des Trägers des Dokuments als auch die leistungsbezogenen Berechtigungsdaten auf einer einzigen oder verschiedenen Anzeigen des Dokuments angezeigt werden. Alternativ oder zusätzlich kann das Dokument einen Aufdruck mit den Stammdaten haben.

Ein besonderer Vorteil der Verwendung nur eines Dokumentes liegt gemäß Ausführungsformen der Erfindung in der möglichen sicherheitstechnischen Ausgestaltung dieses Dokumentes. Ein einfaches, technisch nicht oder nur geringfügig abgesichertes zweites Dokument, zum Beispiel ein papierbasierter Boardingpass oder Bahnfahrkarte entfällt. Hierdurch kann ein höherwertiges und somit sichereres Dokument Verwendung finden. Darüber hinaus sind die zweiten, im Allgemeinen papierbasierenden Dokumente nicht oder nur geringfügig gegen Abnutzung und äußere Einflüsse geschützt, sodass zum Beispiel bei Nässe die Gefahr besteht, dass zum Beispiel der Boardingpass oder Bahnfahrkarte nicht mehr lesbar ist. Darüber hinaus ergibt sich bei der ausschließlichen Verwendung erfindungsgemäßer Dokumente für einen Verkehrsträger das Potenzial auf eine Infrastruktur für Geräte zur Ausgabe der zweiten Dokumente zu verzichten.

Von besonderem weiteren Vorteil ist die Möglichkeit der Aktualisierung der Berechtigungsdaten mit äußerst geringem Aufwand. Im Stand der Technik ist es nämlich im Allgemeinen erforderlich zum Beispiel einen neuen Boarding Pass oder eine neue Fahrkarte mit dazugehöriger Sitzplatzreservierung zu erstellen, wenn eine Umbuchung vorgenommen wird. Im Gegensatz dazu kann eine Umbuchung nach Ausführungsformen der Erfindung dadurch vorgenommen werden, dass aktualisierte Berechtigungsdaten in dem Dokument gespeichert werden. Insbesondere kann hierdurch der ganz erhebliche logistische Aufwand für die Erstellung eines aktualisierten Fahrberechtigungsnachweises, wie im Stand der Technik üblich, eingespart werden.

Nach einer Ausführungsform der Erfindung hat das Dokument ein Bedienelement, welches es dem Nutzer ermöglicht, zwischen verschiedenen Betriebsmodi zu wechseln. Beispielsweise hat das Dokument in einem ersten Betriebsmodus die Funktion eines Berechtigungsnachweises gegenüber einer Fluggesellschaft, in einem zweiten Betriebsmodus gegenüber der Bahn und in einem dritten Betriebsmodus gegenüber einem Betrieb des Nahverkehrs.

Nach einer Ausführungsform der Erfindung hat das Dokument eine vollflächige Anzeige, die aus einer Kombination von OLED- und bistabilen Anzeigeelementen besteht.

In einem weiteren Aspekt betrifft die Erfindung ein Datenverarbeitungsverfahren zur Verarbeitung von Berechtigungsdaten durch ein Dokument, mit den Schritten des Anspruchs 9. In einem weiteren Aspekt betrifft die Offenbarung ein Empfänger-Gerät, insbesondere ein Kontroll-Gerät, zum Empfang von in einem Dokument gespeicherten Berechtigungsdaten mit: Mitteln zur Authentifizierung des Empfänger-Geräts gegenüber dem Dokument, Mitteln zum Empfang der Berechtigungsdaten und einer Signatur der Berechtigungsdaten von dem Dokument, Mitteln zur Prüfung der Signatur der Berechtigungsdaten, und Mitteln zur Erzeugung eines Bestätigungssignals, wenn die Signatur gültig ist.

Nach einem Beispiel der Offenbarung ist das Lesegerät zur Erfassung des Dokuments eines vorbeifahrenden Transportmittels ausgebildet; bei diesem Beispiel ist das Dokument beispielsweise als elektronisches Kraftfahrzeugkennzeichen ausgebildet. Das Lesegerät kann z.B. zur Erfassung eines Fahrzeugparameters, eines Fahrzeugparameters oder eines Gebührenstatus des Kraftfahrzeugs dienen, insbesondere zur Durchführung von Verkehrskontrollen, Abgaskontrollen und/oder Gebührenkontrollen.

In einem weiteren Aspekt betrifft die Offenbarung ein Verfahren zur Überprüfung von in einem Dokument gespeicherten Berechtigungsdaten durch ein Empfänger-Gerät mit folgenden Schritten: Empfang von Berechtigungsdaten und einer Signatur der Berechtigungsdaten von dem Dokument, Prüfung der Signatur der Berechtigungsdaten, Erzeugung eines Bestätigungssignals, wenn die Signatur gültig ist.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Dokuments,
- Figur 2: ein Flussdiagramm einer Ausführungsform eines erfindungsgemäßen Datenverarbeitungsverfahren,
- Figur 3: ein Blockdiagramm einer weiteren Ausführungsform eines erfindungsgemäßen Dokuments,
- Figur 4: eine Draufsicht auf eine Ausführungsform eines erfindungsgemäßen Dokuments, wobei das Dokument Berechtigungsdaten, einschließlich Platzreservierungsdaten, für einen Flug anzeigt,
- Figur 5: eine Ausführungsform eines Dokuments, wobei die Berechtigungsdaten auf einer Anzeige getrennt von den Benutzerstammdaten angezeigt werden,
- Figur 6: eine Ausführungsform des Dokuments vor und nach einer Umbuchung,
- Figur 7: eine Ausführungsform des Dokuments, bei dem die Berechtigungsdaten und die Stammdaten auf einer einzigen Anzeige angezeigt werden,
- Figur 8: eine Ausführungsform eines erfindungsgemäßen Dokuments, mit einer Anzeige, die bistabile und OLED-Anzeigeelemente beinhaltet,
- Figur 9: eine Ausführungsform eines erfindungsgemäßen Dokuments mit einer vollflächigen Anzeige,
- Figur 10: eine Ausführungsform eines erfindungsgemäßen Dokuments, bei der das Senden der Berechtigungsdaten optisch durch Ausgabe eines 2D-Barcodes über die Anzeige erfolgt,
- Figur 11: ein Flussdiagramm einer Ausführungsform eines Verfahrens zur Überprüfung des Dokuments.

Elemente der nachfolgenden Ausführungsformen, die einander entsprechen, sind mit denselben Bezugszeichen gekennzeichnet.

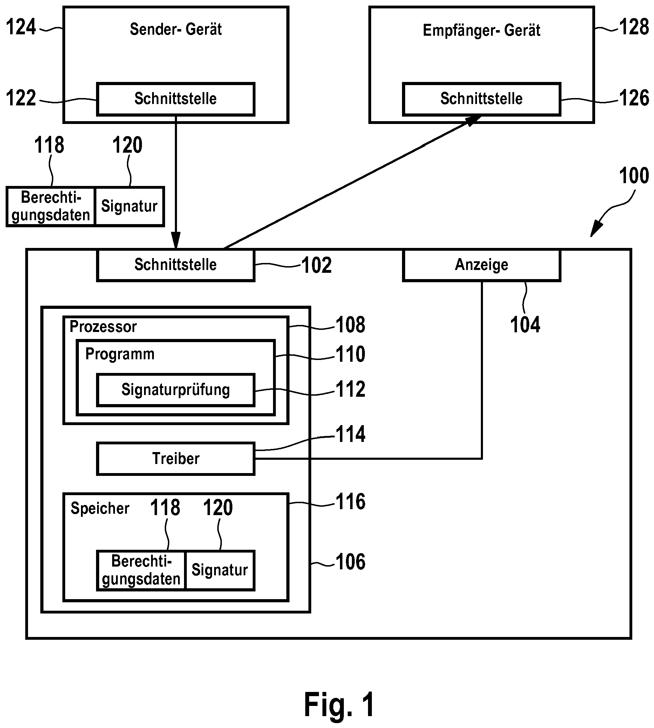

Die Figur 1 zeigt ein Blockdiagramm einer Ausführungsform eines erfindungsgemäßen Dokuments 100. Das Dokument 100 kann papierbasiert und/ oder kunststoffbasiert ausgebildet sein. Insbesondere kann es sich bei dem Dokument 100 um eine Chipkarte handeln. Beispielsweise hat das Dokument 100 eines der Formate ID1, ID2 oder ID3, welche von der ICAO empfohlen werden. Bei dem Dokument kann es sich auch um elektronisches Kraftfahrzeugkennzeichen handeln.

Das Dokument 100 hat eine integrierte Schnittstelle 102. Die Schnittstelle 102 kann für eine Nahfeldkommunikation ausgebildet sein, insbesondere nach einem RFID-Verfahren. Über die Schnittstelle 102 kann auch elektrische Energie in das Dokument 100 eingekoppelt werden, so dass dieses keine eigene Energieversorgung benötigt.

Alternativ hat das Dokument einen Energiespeicher, der durch Einkopplung von elektrischer Energie über die Schnittstelle 102 wieder aufgeladen werden kann.

Das Dokument 100 hat ferner eine Anzeige 104 mit bistabilen Anzeigeelementen. Zusätzlich kann die Anzeige 104 LED-, insbesondere OLED-Anzeigeelemente, aufweisen.

Das Dokument 100 beinhaltet eine integrierte elektronische Schaltung 106, insbesondere einen sogenannten Chip, der in einem Chipkartenmodul des Dokuments 100 angeordnet sein kann, wenn es sich bei dem Dokument 100 um eine Chipkarte handelt.

Die integrierte elektronische Schaltung 106 beinhaltet einen Mikroprozessor 108 zur Ausführung eines Programms 110. Das Programm 110 beinhaltet ein Programmmodul 112 für eine Signaturprüfung sowie weitere Programmmodule, die in der Figur 1 nicht dargestellt sind.

Die Schaltung 106 beinhaltet ferner einen Treiber 114 zur Ansteuerung der Anzeige 104. Ferner beinhaltet die Schaltung 106 einen elektronischen Speicher 116 zur Speicherung von Berechtigungsdaten 118 und einer Signatur 120 der Berechtigungsdaten 118. In dem Speicher 116 können weitere Daten zur optischen Ausgabe über die Anzeige 104 gespeichert sein.

Die Schaltung 106, die Schnittstelle 102 sowie die Anzeige 104 können als diskrete Bauelemente ausgeführt sein oder einen mehr oder weniger hohen Integrationsgrad aufweisen. Insbesondere kann der Treiber 114 abweichend von der Darstellung in der Figur 1 als integraler Bestandteil der Anzeige 104 ausgebildet sein.

Die Schnittstelle 102 ist zur Kommunikation mit einer entsprechenden Schnittstelle 122 eines Sender-Geräts 124 ausgebildet. Das Dokument 100 kann von dem Sender-Gerät 124 die Berechtigungsdaten 118 und deren Signatur 120 empfangen. Bei dem Sender-Gerät 124 kann es sich zum Beispiel um einen Fahrkartenautomaten handeln, einen Computer, insbesondere einen PC, über den online eine Buchung vorgenommen worden ist, oder ein Mobilfunkgerät, über welches die Buchung vorgenommen worden ist. Bei dem Sender-Gerät kann es sich z.B. auch um einen Automaten zur Entrichtung einer Straßenbenutzungsgebühr handeln.

Die Schnittstelle 102 kann ferner zur Kommunikation mit einer entsprechenden Schnittstelle 126 eines Empfänger-Geräts 128 ausgebildet sein. Zur Kommunikation mit dem Empfänger-Gerät 128 kann das Dokument 100 auch eine weitere Schnittstelle aufweisen.

Bei dem Empfänger-Gerät 128 kann es sich zum Beispiel um ein tragbares Kontroll-Gerät handeln, welches ein Fahrkarten-Kontrolleur bei sich tragen kann. Das Empfänger-Gerät 128 kann auch stationär an einem Zugangspunkt aufgestellt sein, um nach erfolgreicher Kontrolle des Dokuments beispielsweise ein Drehkreuz freizugeben oder eine automatische Tür zu öffnen. Das Empfänger-Gerät kann auch z.B. an den Zufahrten zu einer Umweltzone aufgestellt sein, um zu prüfen, dass nur Kraftfahrzeuge in die Umweltzone einfahren, die dazu berechtigt sind.

Zur Benutzung des Dokuments wird wie folgt vorgegangen: Zunächst führt der Träger des Dokuments 100 eine Buchung mit Hilfe des Sender-Gerätes 124 durch. Nach erfolgreicher Buchung sendet das Sender-Gerät 124 die Berechtigungsdaten 118 und deren Signatur 120 an das Dokument 100, welches diese mit seiner Schnittstelle 102 empfängt. Statt einer Buchung kann auch lediglich eine Gebühr entrichtet werden.

Daraufhin wird das Programmmodul 112 automatisch gestartet, so dass die Signatur 120 einer Signaturprüfung unterzogen wird. Wenn die Signaturprüfung erfolgreich ist, das heißt, wenn die Signatur 120 gültig ist, werden die Berechtigungsdaten 118 und die Signatur 120 in dem Speicher 116 gespeichert. Bei dem Speicher 116 handelt es sich um einen nicht-flüchtigen Speicher, so dass die Berechtigungsdaten 118 und deren Signatur 120 auch dann nicht gelöscht werden, wenn keine Energieversorgung mehr zur Verfügung steht.

Falls die Signatur 120 gültig ist, steuert das Programm 110 ferner den Treiber 114 an, um zumindest einen Teil der Berechtigungsdaten 118 über die Anzeige 104 auszugeben. Die Ausgabe der Berechtigungsdaten 118 über die Anzeige 104 kann in einer visuell und kognitiv für einen menschlichen Benutzer erfassbaren Form erfolgen und/oder in Form eines nur maschinenlesbaren optischen Signals, welches durch einen menschlichen Benutzer visuell und/oder kognitiv nicht erfassbar ist.

Nach einer Ausführungsform der Erfindung ist die Schnittstelle 126 des Empfänger-Geräts 128 als optischer Empfänger ausgebildet, um das von der Anzeige 104 abgesendete optische Signal, welches die Berechtigungsdaten 118 und deren Signatur 120 trägt, zu erfassen.

In einer weiteren Ausführungsform ist die Anzeige 104 so ausgebildet, dass sie ein optisches Signal erfassen kann. Insbesondere ist dies mit einer Elektroluminiszenz-Löschungsanzeige realisierbar. In diesem Fall ist eine gesonderte Schnittstelle 102 also nicht erforderlich, da deren Funktion von der Anzeige 104 wahrgenommen wird.

Nach einer weiteren Ausführungsform der Erfindung erfolgt die Kommunikation zwischen dem Dokument 100 und dem Empfänger-Gerät 128 sowohl über die Schnittstelle 102 als auch über das von der Anzeige 104 abgegebene optische Signal. Beispielsweise wird ein Teil der Berechtigungsdaten 118 über die Schnittstelle 102 übertragen, wohingegen ein anderer Teil der Berechtigungsdaten 118 von der Anzeige 104 in der Form eines optischen Signals gesendet wird.

Das Empfänger-Gerät 128 kann die Authentizität der von dem Dokument 100 empfangenen Berechtigungsdaten 118 durch Prüfung von deren Signatur 120 feststellen.

Auch wenn das Empfänger-Gerät 128 nicht zur Verfügung steht oder nicht betriebsbereit ist, hat das Dokument 100 einen hohen Grad an Vertrauenswürdigkeit, da die Anzeige der Berechtigungsdaten 118 nur dann erfolgt, wenn die Signaturprüfung durch das Programmmodul 112 erfolgreich war.

Die Echtheit des Dokumentes 100 kann mittels Techniken des Wert- und Sicherheitsdrucks gegen Fälschung und/oder Verfälschung abgesichert sein. Beispielhaft aber nicht ausschließlich sind dies Farbverlauf (Irisdruck), Mikroschrift, Durchsichtsfenster und/oder -passer, Kippfarbeffekte, Fluoreszenzfarben, Melierfasern, Volumen- und/oder Prägehologramme, Infrarotfarben, Metamerie, Interferenzeffekte sowie Wasserzeichen. Diese und weitere Techniken des Wert- und Sicherheitsdrucks sind dem Fachmann an sich bekannt und können zum Beispiel van Renesse, Optical Document Security, third edition, Artech House, 2005 entnommen werden. Zumindest ein Teil der Anzeigeelemente der Anzeige 104 ist bistabil ausgebildet, um zumindest die wesentlichen Berechtigungsdaten 118 anzeigen zu können, auch dann, wenn keine elektrische Energieversorgung für das Dokument 100 zur Verfügung steht.

Bei der Information, die in dem Speicher 116 als Teil der Berechtigungsdaten 118 oder zusätzlich zu den Berechtigungsdaten 118 gespeichert sein kann, und die von dem Treiber 114 durch Ansteuerung der Anzeige 104 ausgegeben wird, kann es sich auch um einen Fahrzeugparameter und/oder einen Gebührenstatus handeln. Bei dieser Ausführungsform ist das Dokument 100 als elektronisches Kraftfahrzeug-Kennzeichen ausgebildet, welches an einem Kraftfahrzeug angebracht ist oder welches einen integralen Bestandteil des Kraftfahrzeugs bildet.

Beispielsweise kann die elektronische Schaltung 106 eine Schnittstelle zu einem Kraftfahrzeug-Elektronikgerät aufweisen, welches die auszugebende Information an die Schnittstelle der elektronischen Schaltung 106 in regelmäßigen oder unregelmäßigen Zeitabständen sendet. Bei dem Kraftfahrzeug-Elektronikgerät kann es sich beispielsweise um eine sogenannte Electronic Control Unit (ECU) handeln. Das Kraftfahrzeug-Elektronikgerät kann über ein Kraftfahrzeug-Bussystem mit der elektronischen Schaltung 106 vernetzt sein, um über das Kraftfahrzeug-Bussystem die auszugebende Information zu übertragen.

Beispielsweise kann das Kraftfahrzeug-Elektronikgerät zur Erfassung eines Fahrzeug-Parameters dienen, und zwar auf der Basis von Sensorsignalen. Beispielsweise dient ein Sensor zur Erfassung eines aktuellen Abgaswerts des Kraftfahrzeugs. Dieser aktuelle Abgaswert wird in Form einer Information von dem Kraftfahrzeug-Elektronikgerät an die elektronische Schaltung 106 übertragen, sodass der Abgaswert über die Anzeige 104 ausgegeben wird. Entsprechend kann für weitere Fahrzeugparameter, wie zum Beispiel die Geschwindigkeit, den aktuell von dem Kraftfahrzeug erzeugten Lärmpegel oder andere Umwelt- und/oder sicherheitsrelevante Fahrzeugparameter verfahren werden. Das Kraftfahrzeug-Elektronikgerät kann insbesondere als Sender-Gerät 124 ausgebildet sein.

Alternativ oder zusätzlich ist das Kraftfahrzeug-Elektronikgerät zur Bestimmung eines Gebührenstatus ausgebildet. Beispielsweise wird durch das Kraftfahrzeug-Elektronikgerät festgestellt, ob eine erforderliche Gebühr, wie zum Beispiel eine Mautgebühr, eine Steuer oder eine Abgasgebühr, für das Kraftfahrzeug entrichtet worden ist oder zu entrichten ist. Eine entsprechende Information, die den Gebührenstatus angibt, wird von dem Kraftfahrzeug-Elektronikgerät an die elektronische Schaltung 106 in Form der Berechtigungsdaten 118 und deren Signatur 120 ausgegeben, sodass diese Information über die Anzeige 104 ausgegeben wird.

Dementsprechend kann das Empfänger-Gerät 128 als Lesegerät zur Erfassung der Information, die über die Anzeige 104 ausgegeben wird, von dem stehenden und/oder von dem fahrenden Kraftfahrzeug ausgebildet sein. Das Lesegerät kann über ein Netzwerk mit einem zentralen Servercomputer verbunden sein, in dem die von der Anzeige 104 erfasste Information ausgewertet wird.

Die Berechtigungsdaten 118 können das amtliche Kraftfahrzeug-Kennzeichen beinhalten. Auf der Anzeige 104 wird also visuell sichtbar das amtliche Kraftfahrzeug-Kennzeichen ausgegeben sowie zusätzlich eine oder mehrere weitere Informationen, die - je nach Ausführungsform - visuell ohne ein Lesegerät wahrnehmbar oder nicht wahrnehmbar sind.

Eine Aktualisierung des amtlichen Kennzeichens kann dadurch erfolgen, dass eine Aktualisierung Berechtigungsdaten 118 vorgenommen wird, beispielsweise indem Daten, die das aktualisierte amtliche Kennzeichen beinhalten, von dem Kraftfahrzeug-Elektronikgerät über das Kraftfahrzeug-Bussystem an die elektronische Schaltung 106 gesendet werden, welches die Berechtigungsdaten 118 dann mit den empfangenen Daten überschreibt.

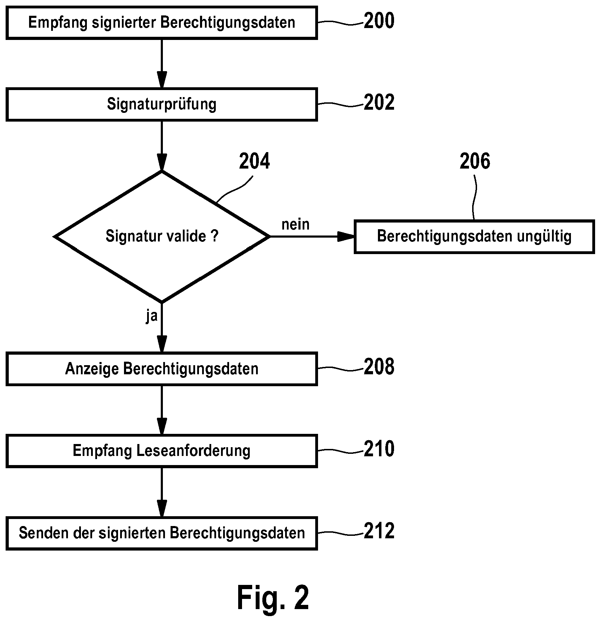

Die Figur 2 zeigt ein Flussdiagramm einer Ausführungsform eines erfindungsgemäßen Verfahrens. In dem Schritt 200 empfängt das Dokument (vgl. Dokument 100 der Figur 1) signierte Berechtigungsdaten von einem Sender-Gerät, wie zum Beispiel einem Fahrkartenautomat, einem Computer oder einem Mobilfunkgerät. Daraufhin prüft das Dokument in dem Schritt 202 die Gültigkeit der Signatur der Berechtigungsdaten. Die Signaturprüfung kann durch eine Zertifikatskettenprüfung erfolgen. Hierzu kann das Dokument in dem Schritt 200 zusammen mit den Berechtigungsdaten und deren Signatur ein Zertifikat empfangen, welches dann in dem Schritt 202 für die Signaturprüfung verwendet wird.

Falls die Signatur valide ist - Schritt 204 - erfolgt in dem Schritt 208 die Wiedergabe zumindest eines Teils der Berechtigungsdaten auf der Anzeige des Dokuments. Andernfalls erfolgt eine solche Wiedergabe nicht, und der Ablauf des Verfahrens bricht in dem Schritt 206 wegen der Ungültigkeit der Signatur ab.

Die Wiedergabe der Berechtigungsdaten in dem Schritt 208 erfolgt vorzugsweise so, dass sie für einen menschlichen Benutzer visuell und kognitiv erfassbar ist. Der Träger des Dokuments 100 erhält so eine visuelle Rückmeldung dahingehend, dass die Berechtigungsdaten erfolgreich auf sein Dokument übertragen worden sind und dort geprüft und akzeptiert worden sind.

Aufgrund der Wiedergabe der Berechtigungsdaten auf der Anzeige des Dokuments kann die Berechtigung des Trägers des Dokuments für die Inanspruchnahme einer bestimmten Transport- oder Beförderungsdienstleistung durch eine Sichtprüfung überprüft werden.

Alternativ oder zusätzlich zu der Sichtprüfung kann ein Empfänger-Gerät für die Berechtigungsprüfung verwendet werden. In diesem Fall empfängt das Dokument in dem Schritt 210 eine Leseanforderung von dem Empfänger-Gerät. Das Dokument sendet daraufhin die Berechtigungsdaten und deren Signatur an das Empfänger-Gerät in dem Schritt 212.

Das Empfänger-Gerät kann daraufhin die Signatur der Berechtigungsdaten überprüfen, und so deren Authentizität feststellen. Die Berechtigungsdaten können dann auf einer Anzeige des Empfänger-Geräts wiedergegeben werden.

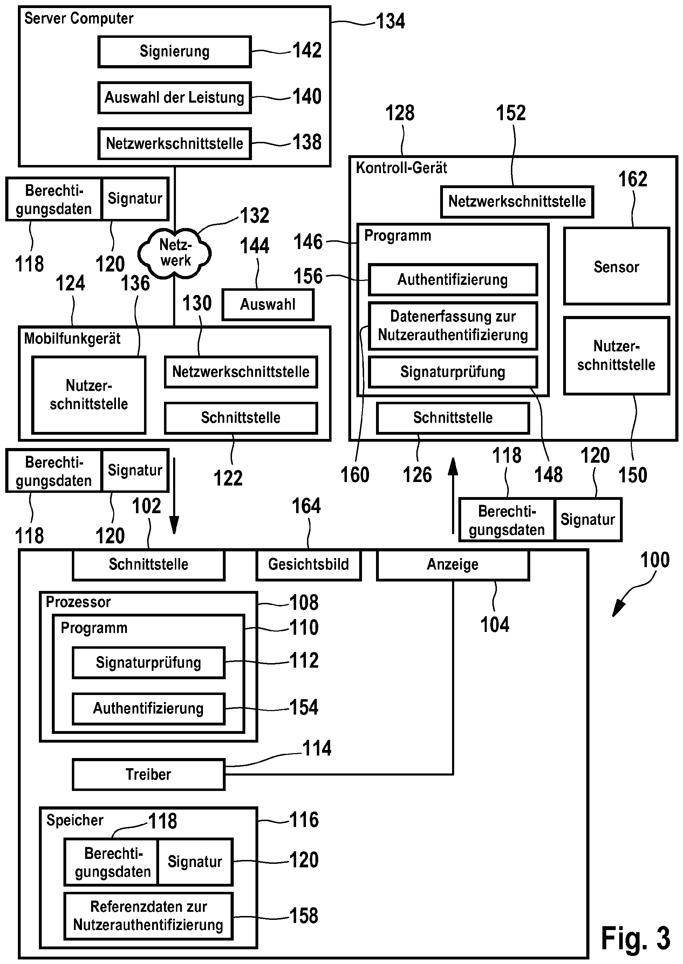

Die Figur 3 zeigt eine weitere Ausführungsform eines erfindungsgemäßen Dokuments 100.

Das Sender-Gerät 124 ist hier als Mobilfunkgerät, insbesondere als Mobiltelefon ausgebildet, so dass das Dokument 100 über seine Schnittstelle 102 mit der Schnittstelle 122 des Mobilfunkgeräts kommunizieren kann. Das Sender-Gerät 124 hat eine Netzwerk-Schnittstelle 130, über die das Mobilfunkgerät über ein Netzwerk 132 mit einem Server-Computer 134 kommunizieren kann.

Beispielsweise handelt es sich bei dem Netzwerk 132 um ein digitales Mobilfunknetz, über welches das Sender-Gerät 124 eine Internet-Verbindung, beispielsweise mittels eines sogenannten Mobile IP-Protokolls mit dem Server-Computer 134 aufbauen kann. Das Sender-Gerät 124 hat eine Nutzer-Schnittstelle 136, welche eine Tastatur und/oder eine Spracheingabevorrichtung beinhalten kann.

Der Server-Computer 134 hat eine Netzwerk-Schnittstelle 138 zur Kommunikation über das Netzwerk 132. Der Server-Computer 134 hat ferner ein Programmmodul 140, welches es einem Nutzer des Sender-Geräts 124 ermöglicht, eine bestimmte Leistung auszuwählen. Beispielsweise wird durch das Programmmodul 140 ein Online-Buchungssystem realisiert.

Der Server-Computer 134 hat ferner ein Programmmodul 142 oder eine entsprechende Hardware-Komponente zur Generierung digitaler Signaturen, insbesondere signaturgesetzkonformer elektronischer Signaturen.

Zur Buchung einer Beförderungsdienstleistung geht der Nutzer des Sender-Geräts 124 wie folgt vor: Durch Auswahl einer Adresse des Server-Computers 134, wie zum Beispiel eines Uniform Ressource Locators (URL), über die Nutzer-Schnittstelle 136 wird über das Netzwerk 132 das Programmmodul 140 aufgerufen und eine Session für das Sender-Gerät 124 gestartet. Über die Nutzer-Schnittstelle 136 kommuniziert der Nutzer dann mit dem Programmmodul 140, um seine Buchung auszuwählen, wozu Daten 144 von dem Sender-Gerät 124 an den Server-Computer 134 übertragen werden.

Daraufhin generiert das Programmmodul 140 die Berechtigungsdaten 118, die die Buchungsdaten beinhalten. Bei den Buchungsdaten kann es sich zum Beispiel um eine konkrete Flugbuchung handeln, oder eine Beförderungsdienstleistung, die anders spezifiziert ist, zum Beispiel durch die Angabe eines Zeitraums. Letzteres kann insbesondere dann der Fall sein, wenn der Nutzer durch Auswahl der Leistung eine Monatskarte für den öffentlichen Nahverkehr erwirbt.

Die Berechtigungsdaten 118, welche die von dem Benutzer ausgewählte Leistung spezifizieren, sowie Daten zur Identifikation des Nutzers, wie zum Beispiel dessen Namen und Geburtsdatum oder eine eindeutige Nutzerkennung, werden von dem Programmmodul 142 signiert. Statt eines Programmmoduls kann hierfür auch eine Hardware-Komponente verwendet werden, wie zum Beispiel eine Chipkarte.

Die Berechtigungsdaten 118 mit deren Signatur 120 werden dann von dem Server-Computer 134 über das Netzwerk 132 an das Mobilfunkgerät 124 gesendet. Das Mobilfunkgerät 124 empfängt die Berechtigungsdaten 118 und die Signatur 120 mit dessen Netzwerk-Schnittstelle 130 und leitet die Berechtigungsdaten 118 und die Signatur 120 über seine Schnittstelle 122 an das Dokument 100 weiter, welches die Berechtigungsdaten 118 und die Signatur 120 mit seiner Schnittstelle 102 empfängt.

Statt eines Mobilfunkgeräts kann hierfür auch ein Computer, insbesondere ein PC, oder ein anderes netzwerkfähiges Gerät verwendet werden.

Nach der Prüfung der Signatur 120 durch das Programmmodul 112 werden die Berechtigungsdaten 118 und die Signatur 120 in dem Speicher 116 gespeichert und der Treiber 114 wird von dem Programm 110 angesteuert, um zumindest einen Teil der Berechtigungsdaten 118 wiederzugeben. Der Nutzer erhält so eine visuelle Rückmeldung, so dass er sicher sein kann, dass valide Berechtigungsdaten 118 zu seinem Dokument 100 übertragen worden sind. Die über die Anzeige 104 wiedergegebenen Berechtigungsdaten 118 können für eine Sichtprüfung des Dokuments 100 verwendet werden. Alternativ oder zusätzlich kann eine Kontrolle der Berechtigung des Trägers des Dokuments 100 für die Inanspruchnahme einer Beförderungsdienstleistung mit Hilfe eines Empfänger-Geräts 128 ausgeführt werden, welches hier als Kontroll-Gerät ausgebildet ist.

Das Empfänger-Gerät 128 hat ein Programm 126 mit einem Programmmodul 148 zur Signaturprüfung. Zur Kontrolle der Berechtigung des Trägers des Dokuments kann das Empfänger-Gerät 128 beispielsweise über seine Schnittstelle 126 eine Leseanforderung an das Dokument 100 senden. Das Dokument 100 sendet daraufhin die Berechtigungsdaten 118 und deren Signatur 120 an das Empfänger-Gerät 128, welches daraufhin die Gültigkeit der Signatur 120 mit Hilfe des Programmmoduls 148 prüft. Wenn die Signatur 120 gültig ist, so wird ein entsprechendes Signal durch das Programm 146 generiert, welches die Gültigkeit der Signatur 120 angibt. Dieses Signal kann über eine Nutzerschnittstelle 150 an einen Fahrkartenkontrolleur ausgegeben werden und/oder maschinell weiter verarbeitet werden, beispielsweise, um einen Zugang des Trägers des Dokuments 100 zu einem Beförderungsmittel automatisch frei zugeben.

Die Berechtigungsdaten 118 können auf der Nutzerschnittstelle 150 angezeigt werden. Das Empfänger-Gerät 128 kann über eine Netzwerk-Schnittselle 152 verfügen, um über das Netzwerk 132 auf den Server-Computer 134 zuzugreifen.

Der Server-Computer 134 kann über eine Datenbank verfügen, in der die Berechtigungsdaten 118 gespeichert sind. Das Empfänger-Gerät 128 kann daher über das Netzwerk 132 einen Abgleich mit dem Server-Computer 134 vornehmen, um zu prüfen, ob die von dem Dokument 100 empfangenen Berechtigungsdaten 118 mit denen in der Datenbank des Server-Computers 134 gespeicherten Berechtigungsdaten übereinstimmen. Beispielsweise können die Berechtigungsdaten 118 in der Datenbank des Server-Computers 134 zwischenzeitlich gelöscht worden sein, weil zum Beispiel der Träger des Dokuments 100 eine Zahlung nicht vorgenommen hat. Falls dies der Fall ist, kann ein entsprechendes Signal von dem Programm 146 generiert und über die Nutzer-Schnittstelle 150 ausgegeben werden, so dass der Träger des Dokuments 100 zur Entrichtung der geschuldeten Vergütung für die Beförderungsdienstleistung aufgefordert wird.

Wenn die Schnittstelle 102 und die Schnittstelle 126 zum Beispiel als Funkschnittstelle ausgebildet sind, insbesondere als RFID-Schnittstelle, so ist es prinzipiell möglich, dass ein lesender Zugriff auf die Berechtigungsdaten 118, die in dem Speicher 116 des Dokuments 100 gespeichert sind, unbemerkt und ohne Einwilligung des Trägers des Dokuments 100 vorgenommen werden könnte. Um dies zu vermeiden, muss sich das Empfänger-Gerät 128 gegenüber dem Dokument 100 zunächst authentifizieren und seine Berechtigung für einen Zugriff auf die Berechtigungsdaten 118 nachweisen, bevor das Programm 110 die Berechtigungsdaten 118 und deren Signatur 120 aus dem Speicher 116 ausliest, um sie über die Schnittstelle 102 an das Empfänger-Gerät 128 zu übertragen.

Für die Authentifizierung des Empfänger-Geräts 128 beinhaltet das Programm 110 ein Programmmodul 154 und das Programm 146 ein Programmmodul 156. Druch Ausführung der Programmmodule 154 und 156 kann eine Authentifizierung des Empfänger-Geräts 128 gegenüber dem Dokument 100 erfolgen. Beispielsweise erfolgt die Authentifizierung mit Hilfe eines kryptographischen Protokolls, basierend auf einem symmetrischen Schlüssel und/oder einem asymmetrischen Schlüsselpaars. Insbesondere können die Programmmodule 154 und 156 ein Verfahren für eine sogenannte Basic Access Control (BAC) und/oder eine Extended Access Control (EAC) implementieren.

Ferner kann es auch erforderlich sein, dass sich das Dokument 100 gegenüber dem Empfänger-Gerät 128 authentifizieren muss, damit das Empfänger-Gerät 128 die Berechtigungsdaten 118 als valide akzeptiert, und das entsprechende Freigabesignal generiert.

Beispielsweise kann in dem Speicher 116 ein Zertifikat des Dokuments 100 gespeichert sein. Für seine Authentifizierung überträgt das Dokument 100 sein Zertifikat an das Empfänger-Gerät 128, welches daraufhin beispielsweise mittels eines Challenge-Response-Verfahrens prüft, ob das Dokument 100 im Besitz des geheimen Schlüssels ist, welcher dem Zertifikat zugeordnet ist.

Ferner kann auch eine Kontrolle dahingehend vorgesehen sein, ob nicht das Dokument 100 dem rechtmäßigen Besitzer entwendet worden ist. Dies kann dadurch erfolgen, dass der rechtmäßige Besitzer des Dokuments 100 den Verlust gegenüber dem Server-Computer 134 meldet, zum Beispiel, indem er eine entsprechende Eingabe über das Netzwerk 132 tätigt.

Das Dokument 100 und/oder die Berechtigungsdaten 118 werden daraufhin in der Datenbank des Server-Computers 134 als gesperrt gekennzeichnet. Wenn durch das Empfänger-Gerät 128 ein Zugriff auf die Datenbank über die Netzwerk-Schnittstelle 152 erfolgt, so erhält das Empfänger-Gerät 128 Kenntnis davon, dass das Dokument 100 als gesperrt in der Datenbank gekennzeichnet ist. Das Programm 146 generiert daraufhin ein entsprechendes Signal, welches über die Nutzer-Schnittstelle 150 ausgegeben wird. Bei einer Kontrolle kann das Dokument 100 daraufhin eingezogen werden.

Alternativ oder zusätzlich muss sich der Träger des Dokuments 100 gegenüber dem Dokument 100 authentifizieren. Dies kann durch Eingabe einer Kennung, insbesondere einer sogenannten PIN, unmittelbar in das Dokument 100 erfolgen, wenn dies über eine entsprechende Nutzer-Schnittstelle verfügt, oder durch Eingabe der PIN in die Nutzer-Schnittstelle 150 des Empfänger-Geräts 128 oder ein an das Empfänger-Gerät 128 angeschlossenes Chipkarten-Terminal, zum Beispiel der Klasse 2.

Alternativ oder zusätzlich können in dem Speicher 116 biometrische Referenzdaten 158 für die Nutzer-Authentifizierung gespeichert sein. Das Dokument 100 kann einen Biometrie-Sensor aufweisen, über den die entsprechenden biometrischen Daten des Trägers des Dokuments 100 erfasst werden. Die erfassten biometrischen Daten werden dann mit den Referenzdaten 158 durch das Programm 110 verglichen. Bei hinreichender Übereinstimmung werden die weiteren Funktionen des Dokuments 100 freigeschaltet, das heißt, nur dann, wenn sich der Träger des Dokuments 100 erfolgreich authentifizieren konnte, werden die Berechtigungsdaten 118 und die Signatur 120 von dem Dokument 100 an das Empfänger-Gerät 128 gesendet.

Alternativ kann die Datenerfassung zur Nutzer-Authentifizierung seitens des Empfänger-Geräts 128 erfolgen. Hierzu beinhaltet das Programm 146 ein Programmmodul 160 sowie einen Sensor 162 zur Erfassung der biometrischen Daten. In diesem Fall kann die Authentifizierung des Trägers des Dokuments 100 wie folgt erfolgen:
Zunächst muss sich das Empfänger-Gerät 128 gegenüber dem Dokument 100 authentifizieren. Daraufhin überträgt das Dokument 100 die Referenzdaten 158 an das Empfänger-Gerät 128. Die zuvorige Authentifizierung des Empfänger-Geräts 128 ist hier besonderes vorteilhaft, um einen angemessenen Schutz für die biometrischen Referenzdaten 158 zu gewährleisten. Die biometrischen Daten des Trägers des Dokuments 100 werden sodann mit Hilfe des Programmmoduls 160 und des Sensors 162 erfasst und von dem Programm 146 auf Übereinstimmung mit den Referenzdaten geprüft. Bei hinreichender Übereinstimmung gilt der Träger des Dokuments 100 als authentisch. Kann die Authentizität des Trägers des Dokuments 100 nicht nachgewiesen werden, so kann wiederum vorgesehen sein, dass das Dokument 100 eingezogen wird.

Alternativ kann das Empfänger-Gerät 128 mit Hilfe des Sensor 162 die biometrischen Daten erfassen und über die Schnittstelle 126 an das Dokument 100 übertragen. Das Dokument führt die Prüfung durch und übermittelt das Ergebnis über die Schnittstelle 102 an das Empfänger-Gerät 128 und/oder stellt dieses auf der Anzeige 104 dar. Vorteil dieser Ausführungsform ist, dass die biometrischen Referenzdaten das Dokument nicht verlassen und so deren besondere Sicherheit gewährleistet ist.

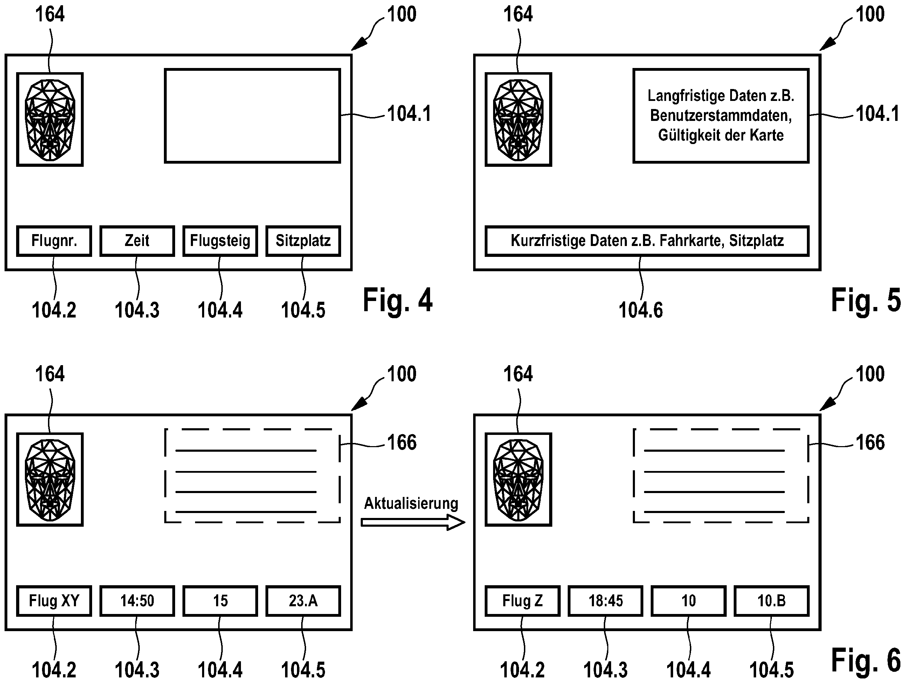

Die Figur 4 zeigt eine Draufsicht auf eine Ausführungsform eines erfindungsgemäßen Dokuments 100. Das Dokument 100 hat ein kartenförmiges Format, insbesondere gemäß ISO 7810. Das Dokument 100 hat eine erste Anzeige 104.1 zur Anzeige von Daten mit langfristiger Gültigkeit, wie zum Beispiel zur Anzeige der Benutzerstammdaten sowie der Gültigkeitsdauer des Dokuments 100. Ferner hat das Dokument 100 mehrere Anzeigen 104.2, 104.3, 104.4 und 104.5 zur Anzeige von Daten, die nur für eine konkrete Beförderungsdienstleistung von Interesse sind, also zum Beispiel für die Buchungsdaten. Im Fall einer Flugbuchung kann zum Beispiel auf der Anzeige 104.2 die Flugnummer, auf der Anzeige 104.3 die Abflugszeit, auf der Anzeige 104.4 der Flugsteig und auf der Anzeige 104.5 der reservierte Sitzplatz angezeigt werden.

Auf dem Dokument 100 kann ferner ein Gesichtsbild 164 des Trägers des Dokuments 100 aufgedruckt sein.

Bei der Anzeige 104.1 einerseits und bei den Anzeigen 104.2 bis 104.5 können unterschiedliche Anzeigetechnologien zum Einsatz kommen, wie zum Beispiel verschiedene bistabile Anzeigetechnologien mit einer unterschiedlichen Zeitdauer des Verharrens in einem der stabilen Zustände. Beispielsweise ist die Anzeige 104.1 langzeit-bistabil, wohingegen die Anzeigen 104.2 bis 104.5 nur kurzzeit-bistabil sind.

In der Ausführungsform der Figur 5 sind die Anzeigen 104.2 bis 104.5 in einer einzigen Anzeige 104.6 zusammengefasst.

Die Figur 6 zeigt eine Ausführungsform eines erfindungsgemäßen Dokuments 100, bei der die Daten mit langfristiger Gültigkeit durch einen Aufdruck 166 auf das Dokument 100 aufgebracht sind. Die Daten mit kurzfristiger Gültigkeit werden dagegen von den Anzeigen 104.2 bis 104.5 angezeigt, wie dies auch in der Ausführungsform der Figur 4 der Fall ist.

In dem hier gezeigten Anwendungsfall werden die Buchungsdaten für einen "Flug XY", Abflugszeit "14.50 Uhr", von Flugsteig "15" mit einer Sitzplatzreservierung "23A" angezeigt. Wenn der Träger des Dokuments 100 eine Umbuchung vornimmt, beispielsweise indem er mit seinem Mobilfunkgerät 124 mit dem Server-Computer 134 Kontakt aufnimmt, um eine entsprechende Umbuchung mit Hilfe des Programmmoduls 140 vorzunehmen (vgl. Ausführungsform der Figur 3), so werden geänderte Berechtigungsdaten an das Dokument 100 übertragen, die die geänderte Buchung beinhalten. Die angezeigten Buchungsdaten werden daraufhin aktualisiert, so dass nunmehr ein "Flug Z", Abflug "18.45 Uhr" von Flugsteig "10" mit Sitzplatzreservierung "10B" angezeigt wird.

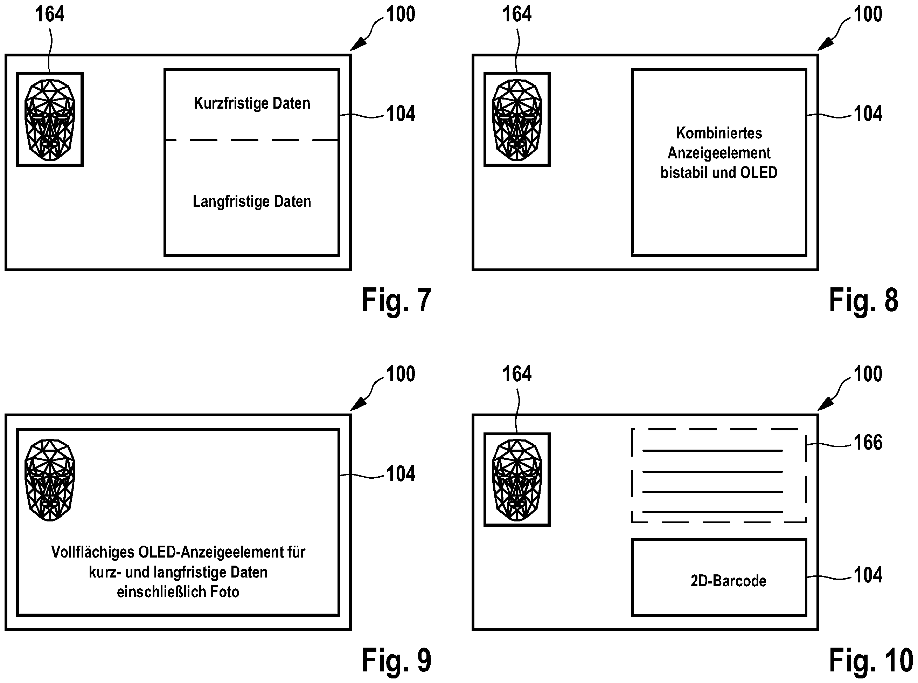

Gemäß der Ausführungsform der Figur 7 werden sowohl die Daten mit kurzfristiger Gültigkeit als auch die Daten mit langfristiger Gültigkeit auf derselben Anzeige angezeigt. Hierzu kann die Anzeige 104 in entsprechende Anzeigefelder unterteilt sein.

Gemäß der Ausführungsform der Figur 8 kann die Anzeige 104 sowohl bistabile Anzeigeelemente als auch emissive Anzeigeelemente, wie zum Beispiel OLED-Anzeigeelemente, beinhalten. Die OLED-Anzeigeelemente werden beispielsweise nur dann für die Wiedergabe von Daten verwendet, solange eine Energiequelle zur Verfügung steht, das heißt, solange ein interner Energiespeicher des Dokuments 100 geladen ist, oder ein externes Sender- oder Empfänger-Gerät zur Verfügung steht.

Nach der Ausführungsform der Figur 9 kann auch das Gesichtsbild 164 auf der Anzeige 104 wiedergegeben werden.

Gemäß der Ausführungsform der Figur 10 kann ein maschinenlesbares optisches Signal von der Anzeige 104 ausgegeben werden, um beispielsweise die Berechtigungsdaten und deren Signatur auf optischem Wege an das Empfänger-Gerät zu übertragen. Die Ausgabe des maschinenlesbaren optischen Signals kann zum Beispiel durch Wiedergabe eines 2D-Barcodes auf der Anzeige 104 erfolgen.

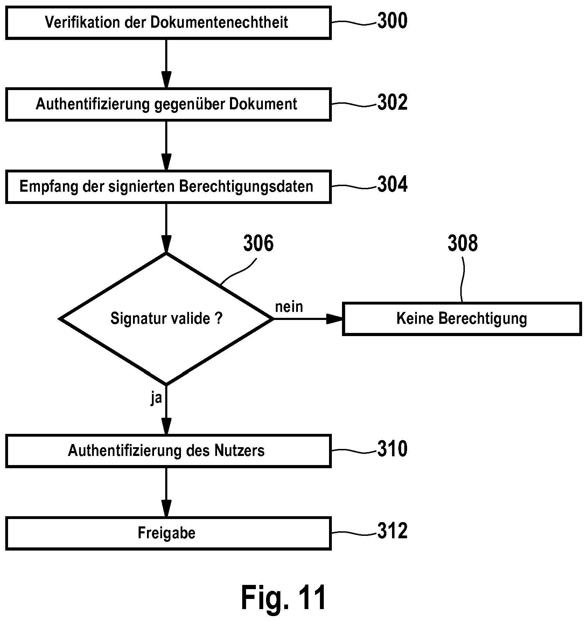

Die Figur 11 zeigt ein Flussdiagramm einer Ausführungsform eines erfindungsgemäßen Verfahrens zur Kontrolle des Dokuments, beispielsweise für eine Fahrscheinkontrolle.

In dem Schritt 300 wird die Echtheit des Dokuments überprüft. Beispielsweise hat das Dokument ein oder mehrere Sicherheitsmerkmale des Wert- oder Sicherheitsdrucks. Diese Merkmale werden zunächst in an sich bekannter Art und Weise überprüft. Eine solche Überprüfung kann rein visuell oder mit Hilfe des Empfänger-Geräts durchgeführt werden; beispielsweise hat das Empfänger-Gerät hierzu eine UV-Lichtquelle, um ein Sicherheitsmerkmal zu überprüfen, das nur im UV-Licht sichtbar wird.

In dem Schritt 302 erfolgt daraufhin eine Authentifizierung des Empfänger-Geräts gegenüber dem Dokument, beispielsweise durch ein BAC- und/oder EAC-Verfahren. In dem Schritt 304 empfängt das Empfänger-Gerät die signierten Berechtigungsdaten von dem Dokument. Die Signatur wird daraufhin in dem Schritt 306 geprüft. Wenn die Signatur nicht valide ist, so wird in dem Schritt 308 ein Signal ausgegeben, wonach keine Berechtigung vorliegt. In diesem Fall wird der Träger des Dokuments beispielsweise zur Entrichtung des Fahrpreises aufgefordert.

Wenn die Signatur valide ist, so wird in dem Schritt 310 eine Authentifizierung des Nutzers vorgenommen, um sicherzustellen, dass das Dokument nicht entwendet worden ist. Die Prüfung der Authentizität des Nutzers kann auch vor der Prüfung der Signatur erfolgen.

In dem Schritt 312 wird dann ein Freigabesignal generiert, welches signalisiert, dass der Träger des Dokuments eine valide Berechtigung zur Nutzung der Beförderungsdienstleistung hat.

### Bezugszeichenliste

- 100: Dokument
- 102: Schnittstelle
- 104: Anzeige
- 106: Schaltung
- 108: Prozessor
- 110: Programm
- 112: Programmmodul
- 114: Treiber
- 116: Speicher
- 118: Berechtigungsdaten
- 120: Signatur
- 122: Schnittstelle
- 124: Sender-Gerät
- 126: Schnittstelle
- 128: Empfänger-Gerät
- 130: Netzwerk-Schnittstelle
- 132: Netzwerk
- 134: Server-Computer
- 136: Nutzer-Schnittstelle
- 138: Netzwerk-Schnittstelle
- 140: Programmmodul
- 142: Programmmodul
- 144: Daten
- 146: Programm
- 148: Programmmodul
- 150: Nutzer-Schnittstelle
- 152: Netzwerk-Schnittselle
- 154: Programmmodul
- 156: Programmmodul
- 158: Referenzdaten
- 160: Programmmodul
- 162: Sensor
- 164: Gesichtsbild
- 166: Aufdruck

## Patentansprüche

1. Dokument mit einer integrierten Anzeige (104), mit einer Schnittstelle (102) zum Empfang und zum Senden von Daten, mit Mitteln (108, 114) zur Ansteuerung der Anzeige, und mit Mitteln (110) zur Verifikation einer Signatur, mit Mitteln zum Einkoppeln von Energie zur Energieversorgung der Mittel zur Ansteuerung der Anzeige, wobei die Schnittstelle zum Empfang von Berechtigungsdaten (118) und der Signatur (120) der Berechtigungsdaten ausgebildet ist, und wobei die Mittel (108, 114) zur Ansteuerung der Anzeige zur Ausgabe zumindest eines Teils der Berechtigungsdaten ausgebildet sind, wobei die Ausgabe nur dann erfolgt, wenn die Signatur gültig ist, und wobei die Schnittstelle zum Senden der Berechtigungsdaten und der Signatur ausgebildet ist,
wobei die Anzeige bistabil ist, so dass die Berechtigungsdaten permanent angezeigt werden, auch wenn keine Energie eingekoppelt wird.

2. Dokument nach Anspruch 1, mit einem Aufdruck (166), der zumindest einen Teil der Stammdaten trägt.

3. Dokument nach einem der vorhergehenden Ansprüche, wobei die Ausgabe der Berechtigungsdaten durch Wiedergabe eines maschinenlesbaren Codes, insbesondere eines Barcodes, auf der Anzeige erfolgt.

4. Dokument nach einem der vorhergehenden Ansprüche, mit Mitteln zur Authentifizierung (154) eines Empfänger-Geräts (128) gegenüber dem Dokument, wobei die erfolgreiche Authentifizierung des Empfänger-Geräts gegenüber dem Dokument Voraussetzung für das Senden der Berechtigungsdaten und der Signatur an das Empfänger-Gerät ist.

5. Dokument nach einem der vorhergehenden Ansprüche, mit Mitteln zur Authentifizierung (154) des Dokuments gegenüber einem Empfänger-Gerät (128), welches zum Empfang der Berechtigungsdaten und der Signatur dient.

6. Dokument nach einem der vorhergehenden Ansprüche, mit Mitteln (158) zur Authentifizierung eines Trägers des Dokuments.

7. Dokument nach Anspruch 6, mit einem elektronischen Speicher (158) zur Speicherung von biometrischen Referenzdaten (158) zur Authentifizierung des Trägers gegenüber dem Dokument.

8. Dokument nach Anspruch 6 oder 7, mit einem Sensor zur Erfassung von biometrischen Daten von dem Träger des Dokuments für dessen Authentifizierung.

9. Datenverarbeitungsverfahren zur Verarbeitung von Berechtigungsdaten durch ein Dokument nach einem der vorhergehenden Ansprüche, mit folgenden Schritten:
- Empfang von Berechtigungsdaten (118) und einer Signatur (120) der Berechtigungsdaten über eine Schnittstelle (102) des Dokuments,
- Prüfung der Gültigkeit der Signatur,
- Einkoppeln von Energie zur Energieversorgung der Mittel zur Ansteuerung der Anzeige,
Anzeige zumindest eines Teils der Berechtigungsdaten durch Ansteuerung einer Anzeige (104) des Dokuments, wobei nur falls die Signatur gültig ist, die Berechtigungsdaten und die Signatur in einem nicht-flüchtigen Speicher (116) des Dokuments gespeichert werden und nur falls die Signatur gültig ist, die Anzeige zumindest eines Teils der Berechtigungsdaten durch Ansteuerung einer Anzeige (104) des Dokuments erfolgt, wobei die Anzeige bistabil ist, so dass die Berechtigungsdaten permanent angezeigt werden, auch wenn keine Energie mehr eingekoppelt wird.

10. Datenverarbeitungsverfahren nach Anspruch 9, mit folgenden weiteren Schritten:
- Authentifizierung eines Empfänger-Geräts (128) gegenüber dem Dokument,
- Senden der Berechtigungsdaten an das Empfänger-Gerät über die Schnittstelle des Dokuments, nur wenn die Authentifizierung des Empfänger-Geräts gegenüber dem Dokument erfolgreich war.

11. Datenverarbeitungsverfahren nach Anspruch 10, wobei das Dokument einen elektronischen Speicher (116) zur Speicherung von biometrischen Referenzdaten (158) eines Trägers des Dokuments hat, und wobei die biometrischen Referenzdaten nur dann an das Empfänger-Gerät gesendet werden, falls die Authentifizierung des Empfänger-Geräts gegenüber dem Dokument erfolgreich war.

12. Datenverarbeitungsverfahren nach Anspruch 9,10 oder 11, wobei die Berechtigungsdaten Buchungsdaten beinhalten, mit folgenden weiteren Schritten:
- Empfang von aktualisierten Buchungsdaten und einer Signatur der aktualisierten Buchungsdaten,
- Prüfung der Signatur der aktualisierten Buchungsdaten,
- falls die Signatur der aktualisierten Buchungsdaten gültig ist: Speicherung der aktualisierten Buchungsdaten in dem Speicher des Dokuments und Anzeige der aktualisierten Buchungsdaten durch Ansteuerung der Anzeigevorrichtung des Dokuments.

## Claims

1. A document with an integrated display (104), with an interface (102) for receiving and for transmitting data, with means (108, 114) for controlling the display, and with means (110) for verifying a signature, with means for coupling in energy in order to supply energy to the means for controlling the display,
wherein
the interface is configured to receive the authorisation data (118) and the signature (120) of the authorisation data, and wherein the means (108, 114) for controlling the display are configured to output at least some of the authorisation data, wherein the output is performed only if the signature is valid, and wherein the interface is configured for transmitting the authorisation data and the signature, wherein the display is bistable, such that the authorisation data is permanently displayed, even if no energy is coupled in.

2. The document according to claim 1, with an imprint (166) carrying at least some of the master data.

3. The document according to either one of the preceding claims, wherein the authorisation data is output by displaying a machine-readable code, in particular a barcode, on the display.

4. The document according to any one of the preceding claims, with means for authenticating (154) a receiver device (128) to the document, wherein the successful authentication of the receiver device to the document is a precondition for the transmission of the authentication data and the signature to the receiver device.

5. The document according to any one of the preceding claims, with means for authenticating (154) the document to a receiver device (128), which is used to receive the authentication data and the signature.

6. The document according to any one of the preceding claims, with means (158) for authenticating a carrier of the document.

7. The document according to claim 6, with an electronic memory (158) for storing biometric reference data (158) for authenticating the carrier to the document.

8. The document according to claim 6 or 7, with a sensor for detecting biometric data of the carrier of the document for authentication thereof.

9. A data processing method for processing authorisation data by a document according to any one of the preceding claims, said method comprising the following steps:
- receiving authorisation data (118) and a signature (120) of the authorisation data via an interface (102) of the document,
- checking the validity of the signature,
- coupling in energy in order to supply energy to the means for controlling the display,
- displaying at least some of the authorisation data by control of a display (104) of the document,
wherein
only if the signature is valid are the authentication data and the signature stored in a non-volatile memory (116) of the document, and only if the signature is valid is at least some of the authorisation data displayed by control of a display (104) of the document, wherein the display is bistable, such that the authorisation data is permanently displayed, even if energy is no longer coupled in.

10. The data processing method according to claim 9, comprising the following further steps:
- authenticating a receiver device (128) the document,
- transmitting the authorisation data to the receiver device via the interface of the document, only if the authentication of the receiver device to the document was successful.

11. The data processing method according to claim 10, wherein the document has an electronic memory (116) for storing biometric reference data (158) of a carrier of the document, and wherein the biometric reference data is transmitted to the receiver device only if the authentication of the receiver device to the document was successful.

12. The data processing method according to claim 9, 10 or 11, wherein the authentication data contains booking data, said method comprising the following further steps:
- receiving updated booking data and a signature of the updated booking data,
- checking the signature of the updated booking data,
- if the signature of the updated booking data is valid: storing the updated booking data in the memory of the document and displaying the updated booking data by control of the display device of the document.

## Revendications

1. Document avec un affichage intégré (104), avec une interface (102) pour la réception et l'envoi de données, avec des moyens (108, 114) pour le démarrage de l'affichage et des moyens (110) pour la vérification d'une signature, avec des moyens pour le couplage d'énergie destiné à l'alimentation en énergie des moyens pour le démarrage de l'affichage,
où l'interface est conçue pour la réception de données de justification (118) et de la signature (120) des données de justification, et où les moyens (108, 114) pour le démarrage de l'affichage sont conçus pour l'édition d'au moins une partie des données de justification, où l'édition n'a lieu que si la signature est valide et où l'interface est conçue pour l'envoi des données de justification et de la signature,
où l'affichage est bistable de sorte que les données de justification sont affichées en permanence, même lorsque aucune énergie n'est couplée.

2. Document selon la revendication 1, avec une surimpression (166) qui porte au moins une partie des données d'origine.

3. Document selon l'une des revendications précédentes, dans lequel l'édition des données de justification a lieu sur l'affichage par une restitution d'un code lisible par machine, notamment un code-barres.

4. Document selon l'une des revendications précédentes, avec des moyens pour l'authentification (154) d'un appareil récepteur (128) vis-à-vis du document, où l'authentification réussie de l'appareil récepteur vis-à-vis du document est une condition pour l'envoi des données de justification et de la signature à l'appareil récepteur.

5. Document selon l'une des revendications précédentes, avec des moyens pour l'authentification (154) du document vis-à-vis d'un appareil récepteur (128), lequel sert à la réception des données de justification et de la signature.

6. Document selon l'une des revendications précédentes, avec des moyens (158) pour l'authentification d'un porteur du document.

7. Document selon la revendication 6, avec une mémoire électronique (158) pour le stockage de données de référence (158) biométriques pour l'authentification du porteur vis-à-vis du document.

8. Document selon la revendication 6 ou 7, avec un capteur pour la détection de données biométriques d'un porteur du document pour son authentification.

9. Procédé de traitement de données pour le traitement de données de justification par un document selon l'une des revendications précédentes, avec les étapes suivantes :
- réception de données de justification (118) et d'une signature (120) des données de justification par le biais d'une interface (102) du document,
- vérification de la validité de la signature,
- couplage d'énergie pour l'alimentation en énergie des moyens pour le démarrage de l'affichage,
affichage d'au moins une partie des données de justification par le démarrage d'un affichage (104) du document,
où, uniquement dans le cas où la signature est valide, les données de justification et la signature sont stockées dans une mémoire non volatile (116) du document et uniquement dans le cas où la signature est valide, l'affichage d'au moins une partie des données de justification a lieu par le démarrage d'un affichage (104) du document, où l'affichage est bistable de sorte que les données de justification sont affichées en permanence, même si aucune énergie n'est couplée.

10. Procédé de traitement de données selon la revendication 9, avec les autres étapes suivantes :
- authentification d'un appareil récepteur (128) vis-à-vis du document,
- envoi des données de justification à l'appareil récepteur par le biais de l'interface du document uniquement si l'authentification de l'appareil récepteur a été réussie vis-à-vis du document.

11. Procédé de traitement de données selon la revendication 10, dans lequel le document a une mémoire électronique (116) pour le stockage de données de référence (158) biométriques d'un porteur du document, et où les données de référence biométriques ne sont envoyées à l'appareil récepteur que si l'authentification de l'appareil récepteur a été réussie vis-à-vis du document.

12. Procédé de traitement de données selon la revendication 9, 10 ou 11, dans lequel les données de justification contiennent des données de comptabilité, avec les autres étapes suivantes :
- réception des données de comptabilité actualisées et d'une signature des données de comptabilité actualisées,
- vérification de la signature des données de comptabilité actualisées,
- dans le cas où la signature est valide : stockage des données de comptabilité actualisées dans la mémoire du document et affichage des données de comptabilité actualisées par le démarrage du dispositif d'affichage du document.
